# NEUE EUROPÄISCHE PATENTSCHRIFT

(11) **EP 2 875 305 B2**
(45) Veröffentlichungstag und Bekanntmachung des Hinweises auf die Entscheidung über den Einspruch: **21.08.2019**
(45) Hinweis auf die Patenterteilung: 17.08.2016
(21) Anmeldenummer: 13745569.7
(22) Anmeldetag: 15.07.2013
(51) Int. Cl.: F41A 23/30, F41A 23/34, F41A 23/28

(54) **WAFFENPLATTFORM, MILITÄRISCHES FAHRZEUG MIT EINER WAFFENPLATTFORM UND VERFAHREN ZUM BETRIEB EINER WAFFENPLATTFORM**
WEAPONS PLATFORM, MILITARY VEHICLE COMPRISING A WEAPONS PLATFORM AND METHOD FOR OPERATING A WEAPONS PLATFORM
PLATEFORME DE TIR, VÉHICULE MILITAIRE COMPORTANT UNE PLATEFORME DE TIR ET PROCÉDÉ POUR FAIRE FONCTIONNER UNE PLATEFORME DE TIR

(30) Priorität: 20.07.2012 DE 102012106626
(43) Veröffentlichungstag der Anmeldung: 27.05.2015
(73) Patentinhaber: Krauss-Maffei Wegmann GmbH & Co. KG, 80997 München (DE)
(72) Erfinder: RACZEK, Matthias, 34127 Kassel (DE); CZOK, Matthias, 34127 Kassel (DE); WICHE, Roman, 34127 Kassel (DE); CREDE, Volker, 34127 Kassel (DE)
(74) Vertreter: Feder Walter Ebert
(86) Internationale Anmeldenummer: PCT/DE2013/100261
(87) Internationale Veröffentlichungsnummer: WO 2014/012535

(56) Entgegenhaltungen:
- EP-A1- 1 677 065
- WO-A1-03/025494
- WO-A2-01/51874
- DE-A1- 2 231 543
- DE-A1- 3 130 830
- DE-A1- 19 608 455
- DE-A1- 19 713 192
- DE-A1- 19 716 198
- DE-A1-102006 014 155
- DE-A1-102006 021 135
- DE-A1-102006 021 135
- DE-B4-102006 021 135
- DE-C2- 3 943 508
- Military-today.com: "T5-52", , 10. Mai 2012 (2012-05-10), XP002714426, Gefunden im Internet: URL:http://www.military-today.com/artiller y/t5_52.htm [gefunden am 2013-10-09]
- BIASS E J ET AL: "SELF-PROPOLLED ARTILLERY AUTOLOADING AND 52 ARE THE TREND", ARMADA INTERNATIONAL, ARMADA INTERNATIONAL, ZURICH, CH, Bd. 27, Nr. 4, 1. August 2003 (2003-08-01) , XP001177154, ISSN: 0252-9793

## Beschreibung

Die Erfindung betrifft eine Waffenplattform mit einem Unterbau und einer gegenüber dem Unterbau richtbar angeordneten Waffe, wobei der Unterbau über eine zur Aufnahme von Abschussreaktionskräften gedämpft ausgestaltete Abstützvorrichtung gegenüber dem Untergrund abstützbar ist. Ferner betrifft die Erfindung ein militärisches Fahrzeug mit einer derartigen Waffenplattform. Ein weiterer Gegenstand der Erfindung ist ein Verfahren zum Betrieb einer Waffenplattform.

Waffenplattformen weisen üblicherweise einen Unterbau und eine oberhalb des Unterbaus angeordnete, in Azimut und Elevation gegenüber dem Unterbau richtbare Waffe auf. Um solche Waffenplattformen zu einem bestimmten Einsatzort verbringen zu können, ist es bekannt, die Waffenplattformen entweder als festen Bestandteil eines militärischen Fahrzeugs oder als eine Art lösbaren Rüstsatzes auszubilden, der lösbar von einem Fahrzeug aufgenommen wird. Im Einsatz können die Waffenplattformen dann vom Fahrzeug aus bedient werden, wobei auch Waffenplattformen bekannt sind, die unabhängig von einem Fahrzeug bedient werden können, beispielsweise als stationäre Waffenplattformen zum Schutz von Feldlagern o. ä. Objekten.

Bei der Schussabgabe entstehen Abschussreaktionskräfte, welche über die Waffe auf den Unterbau der Waffenplattform einwirken. Um diese zum Teil erheblichen Kräfte kontrolliert ableiten zu können, werden an dem Unterbau Abstützvorrichtungen vorgesehen, welche diesen gegenüber dem Untergrund abstützen und für eine kontrollierte Ableitung der Abschussreaktionskräfte in den Untergrund sorgen.

Aufgrund der innerhalb eines sehr kurzen Zeitintervalls auftretenden Abschussreaktionskräfte, die nach Art einer Stoßwelle in die Waffenplattform eingeleitet werden, ergeben sich besondere Anforderungen an die Abstützvorrichtung.

Denn bei starr ausgebildeten Abstützvorrichtungen kann es aufgrund der stoßartig auftretenden Abschussreaktionskräfte dazu kommen, dass die im Kraftfluss der Abschussreaktionskräfte liegenden Bauteile den entsprechenden Belastungen nicht standzuhalten vermögen, so dass diese beispielsweise im Bereich von Schweißverbindungen und ähnlichen Schwachstellen brechen. Aus diesem Grund sind auch gedämpft ausgestaltete Abstützvorrichtungen vor allem bei großkalibrigen und insoweit erhebliche Abschussreaktionskräfte erzeugenden Waffen bekannt, etwa aus der WO 03/025494 A1 oder WO 0 151 874. Zur Dämpfung weisen solche Abstützvorrichtungen mehrere zwischen dem Unterbau der Waffenplattform und dem Untergrund angeordnete Dämpfungsfedern auf, über welche sich die von den Bauteilen aufgenommenen Kräfte auf ein Maximum begrenzen lassen, welches unterhalb der Zerstörschwelle der entsprechenden Bauteile liegt.

Hierzu kommt, dass die Abschussreaktionskräfte in ihrer Richtung und ihrem Betrag stark variieren können, was mit weiteren Anforderungen an die Abstützvorrichtung verbunden ist.

Beispielsweise unterscheiden sich rückstoßbehaftete Rohrwaffen von solchen Waffen, welche als rückstoßfreie Werfer ausgebildet sind, bereits durch das Vorzeichen der beim Abschuss entstehenden Abschussreaktionskräfte. Denn während die Abschussreaktionskräfte bei rückstoßbehafteten Rohrwaffen, wie beispielsweise Geschützen oder Haubitzen nach Art eines Rückstoßes entgegen der Schussrichtung der Rohrwaffe wirken, treten bei Werfern, wie z. B. Raketenwerfern, Abschussreaktionskräfte auf, die in Schussrichtung der Waffe ausgerichtet sind. Aber auch bei Waffen gleicher Bauart können die Abschussreaktionskräfte von Schuss zu Schuss deutlich unterschiedlich ausfallen, da diese beispielsweise von der Richtstellung der Waffe in Azimut und Elevation, von der Art des verwendeten Geschosses und von der Treibladungsmenge abhängig sind.

Bei der Entwicklung solcher Waffenplattformen wird die Dämpfung der Abstützvorrichtung daher üblicherweise für eine größte zu erwartende Belastung ausgelegt, beispielsweise für eine Schussabgabe in ungünstiger Richtstellung bei maximaler Treibladungsmenge. Dies bringt zwar den Vorteil mit sich, dass die Waffenplattform die maximale Abschussreaktionskraft abfedern kann, als nachteilig hat es sich jedoch herausgestellt, dass die Dämpfung bei einer solchen Auslegung in den meisten Fällen zu hart eingestellt ist, da die Abschussreaktionskräfte z. B. aufgrund der Richtstellung der Waffe meist deutlich unterhalb der erwarteten Maximalkraft liegen. Eine zu hart eingestellte Dämpfung der Abstützvorrichtung kann in diesen Fällen - vergleichbar wie bei einer starren Abstützvorrichtung - dazu führen, dass die Lebensdauer der im Kraftfluss der Abschussreaktionskräfte liegenden Bauteile beeinträchtigt wird.

Vor diesem Hintergrund stellt sich die Erfindung die Aufgabe, eine Waffenplattform, ein Fahrzeug wie auch ein Verfahren zum Betrieb einer Waffenplattform anzugeben, welche sich durch eine verringerte Beeinträchtigung der Abstützvorrichtung durch die sich beim Schuss ergebenden Abschussreaktionskräfte auszeichnen.

Bei einer Waffenplattform der eingangs genannten Art wird die Aufgabe dadurch gelöst, dass die Dämpfungscharakteristik der Abstützvorrichtung in Abhängigkeit der zu erwartenden Abschussreaktionskräfte der Waffe einstellbar ist.

Durch die Anpassung der Dämpfungscharakteristik der Abstützvorrichtung an die zu erwartenden Abschussreaktionskräfte können die mechanischen Belastungen der im Kraftfluss liegenden Bauteile auf ein Minimum begrenzt werden. Die Dämpfung wird nur bei großen zu erwartenden Abschussreaktionskräften hart eingestellt. Bei unterhalb der maximalen Abschussrektionskraft liegenden Erwartungen wird die Dämpfung weicher eingestellt, so dass die Bauteile mechanisch weniger stark beeinträchtigt werden. Es lässt sich eine größere Lebensdauer der Waffenplattform erreichen.

Gemäß einer vorteilhaften Ausgestaltung ist die Dämpfungscharakteristik der Abstützvorrichtung in Abhängigkeit des Betrags der zu erwartenden Abschussreaktionskräfte der Waffe einstellbar. Wird eine betragsmäßig große Abschussreaktionskraft erwartet, so kann die Dämpfung der Abstützvorrichtung insgesamt härter eingestellt werden als bei Erwartung kleinerer Beträge der Abschussreaktionskräfte. Hierdurch kann die Belastung der im Kraftfluss liegenden Bauteile verringert und somit die Lebendauer der Waffenplattform erhöht werden.

Vorteilhaft ist es ferner, wenn die Dämpfungscharakteristik der Abstützvorrichtung in Abhängigkeit der Richtung der zu erwartenden Abschussreaktionskräfte der Waffe einstellbar ist. Die Dämpfung der Abstützvorrichtung kann derart eingestellt werden, dass sie in der Richtung der erwarteten Abschussreaktionskräfte maximal ist. Auf diese Weise kann eine richtungsmäßige Anpassung der Dämpfung an die Abschussreaktionskräfte erfolgen, welche zu einer verringerten Beanspruchung der der im Kraftfluss liegenden Bauteile beiträgt.

Bevorzugt ist es, wenn die Dämpfungscharakteristik der Abstützvorrichtung in Abhängigkeit der Art der Waffe einstellbar ist. Je nach Art der Waffe können die zu erwartenden Abschussreaktionskräfte deutlich variieren, was insbesondere dann problematisch werden kann, wenn eine Waffenplattform wahlweise mit der einen oder einer anderen Waffe betrieben werden soll. Während die Abschussreaktionskräfte z. B. bei rückstoßbehafteten Rohrwaffen nach Art eines Rückstoßes entgegen der Schussrichtung der Rohrwaffe wirken, treten bei rückstoßfreien Werfern Abschussreaktionskräfte auf, die nach Art von Zugkräften eher in Schussrichtung der Waffe gerichtet sind. Daher kann insbesondere bei solchen Waffenplattformen, welche mit Waffen unterschiedlicher Art bestückbar sind, durch die Anpassung der Dämpfungscharakteristik der Abstützvorrichtung an die Art der Waffe eine hohe Lebensdauer auch nach mehrmaligem Waffenwechsel und vielen Schussabgaben erreicht werden.

Als vorteilhaft hat es sich ferner erwiesen, wenn die Dämpfungscharakteristik der Abstützvorrichtung in Abhängigkeit der Richtstellung der Waffe einstellbar ist. Mit der Elevations- bzw. Azimut-Richtstellung der Waffe ergeben sich Änderungen in der Wirkrichtung der Abschussreaktionskräfte. Durch die Einstellung der Dämpfungscharakteristik kann eine Anpassung der Dämpfung an die Richtstellung der Waffe erfolgen. Bevorzugt ist die Richtstellung der Waffe sensorisch erfassbar, so dass die Einstellung der Dämpfungscharakteristik auf Grundlage der ermittelten Richtstellung automatisiert erfolgen kann. Die Richtstellung kann über eine Erfassungsvorrichtung, insbesondere einen Stellungsgeber, erfasst werden. Besonders bevorzugt sind ein Stellungsgeber für die Elevationsrichtstellung und ein Stellungsgeber für die Azimutrichtstellung vorgesehen, so dass Elevation und Azimut separat erfasst werden können.

Eine weitere vorteilhafte Ausgestaltung sieht vor, dass die Dämpfungscharakteristik der Abstützvorrichtung in Abhängigkeit des Typs einer in die Waffe eingebrachten Munition einstellbar ist. Betragsmäßige Unterschiede der Abschussreaktionskräfte, welche sich durch die Verwendung von Munition unterschiedlicher Art ergeben, können durch Einstellung der Dämpfungscharakteristik ausgeglichen werden. Der Munitionstyp kann über eine an der Waffe angeordnete Erfassungsvorrichtung automatisch erfasst werden oder durch einen Benutzer der Waffenplattform manuell eingegeben werden.

Vorteilhaft ist es ferner, wenn die Dämpfungscharakteristik der Abstützvorrichtung in Abhängigkeit der in die Waffe eingebrachten Treibladung einstellbar ist. Bei Verwendung unterschiedlicher Arten von Treibladungen und/oder unterschiedlicher Treibladungsmengen können sich betragsmäßige Änderungen der Abschussreaktionskräfte ergeben. Diese Veränderungen können durch die Anpassung der Dämpfungscharakteristik an-die Treibladungsart und/oder Treibladungsmenge ausgeglichen werden. Die Treibladungsart und/oder Treibladungsmenge kann über eine geeignete Erfassungsvorrichtung an der Waffe erfasst werden, so dass die Einstellung der Dämpfungscharakteristik auf Grundlage der ermittelten Art und/oder Menge der Treibladung erfolgen kann.

Gemäß einer weiteren vorteilhaften Ausgestaltung ist vorgesehen, dass die Abstützvorrichtung mehrere Stützen aufweist. Über die sich auf dem Untergrund abstützenden Stützen können die Abschussreaktionskräfte kontrolliert in den Untergrund eingeleitet werden. Die Stützen können an dem Unterbau der Waffenplattform angeordnet sein, wodurch ein stabiler Stand des Unterbaus auf dem Untergrund ermöglicht wird. Bevorzugt weist die Abstützvorrichtung drei Stützen auf, wodurch sich selbst auf unebenem Untergrund nach Art eines Dreibeins ein sicherer Stand erreichen lässt.

Vorteilhaft ist es, wenn die Stützen mit einem ihrer Enden an dem Unterbau angelenkt sind und das andere Ende einen Abstützpunkt bildet. Durch die schwenkbare Anlenkung der Stützen am Unterbau können die als Abstützpunkte dienenden Enden aus deren Abstützstellung, in welcher sie auf dem Untergrund aufliegen, eine Transportstellung verschwenkt werden. Es ergibt sich eine vorteilhafte, da einfache, Handhabung, weil es hierzu nicht erforderlich ist, die Stützen zu demontieren.

Bevorzugt weisen die Stützen eine einstellbare Dämpfung auf, so dass durch Einstellung der Dämpfung der Stützen die Dämpfungscharakteristik der Abstützvorrichtung beeinflusst werden kann.

Vorteilhaft ist es ferner, wenn die Stützen jeweils mindestens ein Dämpfungselement aufweisen. Durch das Dämpfungselement kann die Stütze zusätzlich zu ihrer abstützenden Funktion auch eine dämpfende Funktion erfüllen. Bevorzugt ist die Dämpfung des Dämpfungselements einstellbar, so dass über die Einstellung der Dämpfung des Dämpfungselements die Dämpfung der Stütze beeinflusst werden kann. Sind an der Waffenplattform mehrere Stützen vorgesehen, so ergibt sich eine besonders vorteilhafte Ausgestaltung, wenn die Dämpfungselemente der Stützen unabhängig voneinander einstellbar sind. Hierdurch kann eine Dämpfungscharakteristik der Abstützvorrichtung eingestellt werden, bei welcher die Abschussreaktionskräfte in unterschiedlichen Richtungen unterschiedlich stark gedämpft werden.

Zur Einstellung der Dämpfung des Dämpfungselements kann die Waffenplattform eine Steuereinrichtung aufweisen. Der Steuereinrichtung kann die erfasste Richtstellung der Waffe und/oder der erfasste Munitionstyp und/oder die erfasste Treibladungsmenge zugeführt werden, so dass die Einstellung der Dämpfung der Dämpfungselemente auf Grundlage der erfassten Dichtstellung und/oder des erfassten Munitionstyps und /oder der erfassten Treibladungsmenge erfolgen kann.

Vorteilhaft ist ferner, wenn die Stützen jeweils ein Federelement aufweisen. Über das Federelement kann der Dämpfungsweg der Dämpfungselemente zurückgestellt werden, d. h. nach erfolgter Krafteinleitung und Dämpfung durch die Dämpfungselemente können diese über das Federelement in deren Ausgansstellung zurück bewegt werden. Die erforderliche Federkraft kann über eine mechanische Feder oder eine entsprechende Hydraulik erzeugt werden. Konstruktiv vorteilhaft ist eine Waffenplattform, bei welcher das Dämpfungselement als Hydraulikzylinder ausgebildet ist. Denn Hydraulikzylinder mit einstellbarer Dämpfung lassen sich als Zukaufteile preiswert beschaffen.

Bei einem militärischen Fahrzeug der eingangs genannten Art, wird die Aufgabe dadurch **gelöst**, dass die Dämpfungscharakteristik der Abstützvorrichtung in Abhängigkeit der zu erwartenden Abschussreaktionskräfte der Waffe einstellbar ist.

Durch die Anpassung der Dämpfungscharakteristik der Abstützvorrichtung an die zu erwartenden Abschussreaktionskräfte können die mechanischen Belastungen der im Kraftfluss liegenden Bauteile auf ein Minimum begrenzt werden. Die Dämpfung wird nur bei großen zu erwartenden Abschussreaktionskräften hart eingestellt. Bei unterhalb der maximalen Abschussrektionskraft liegenden Erwartungen wird die Dämpfung weicher eingestellt, so dass die Bauteile mechanisch weniger stark beeinträchtigt werden. Es lässt sich eine größere Lebensdauer der Waffenplattform erreichen.

Zur **Lösung** der Aufgabe trägt es bei einem Verfahren der eingangs genannten Art bei, wenn die Dämpfungscharakteristik der Abstützvorrichtung in Abhängigkeit der zu erwartenden Abschussreaktionskräfte der Waffe eingestellt wird.

Durch die Anpassung der Dämpfungscharakteristik der Abstützvorrichtung an die zu erwartenden Abschussreaktionskräfte können die mechanischen Belastungen der im Kraftfluss liegenden Bauteile auf ein Minimum begrenzt werden. Die Dämpfung wird nur bei großen zu erwartenden Abschussreaktionskräften hart eingestellt. Bei unterhalb der maximalen Abschussrektionskraft liegenden Erwartungen wird die Dämpfung weicher eingestellt, so dass die Bauteile mechanisch weniger stark beeinträchtigt werden. Es lässt sich eine größere Lebensdauer der Waffenplattform erreichen.

Gemäß einer vorteilhaften Ausgestaltung des Verfahrens weist die Abstützvorrichtung mehrere einstellbar gedämpfte Stützen auf, die jeweils Abstützpunkte der Waffenplattform bilden, wobei die Dämpfung der Stützen umso weicher eingestellt wird, je mehr die Schussrichtung der Waffe in Azimut mit der Position des jeweiligen Abstützpunktes fluchtet. Bei der Schussabgabe mit rückstoßbehafteten Waffen entstehen Abschussreaktionskräfte, welche entgegen der Schussrichtung der Waffe gerichtet sind, weshalb eine weichere Dämpfung im Bereich vor der Waffe und eine entsprechend härtere Dämpfung im Bereich hinter der Waffe eine vorteilhafte Ableitung der Abschussreaktionskräfte erlauben.

Gemäß einer alternativen Ausgestaltung ist vorgesehen, dass die Abstützvorrichtung mehrere einstellbar gedämpfte Stützen aufweist, die jeweils Abstützpunkte der Waffenplattform bilden, wobei die Dämpfung der Stützen umso härter eingestellt wird, je mehr die Schussrichtung der Waffe in Azimut mit der Position des jeweiligen Abstützpunktes fluchtet. Bei Waffen, bei welchen Abschussreaktionskräfte auftreten, die im Wesentlichen in Schussrichtung gerichtet sind, kann durch eine im Bereich der Schussrichtung härtere Dämpfungscharakteristik der Abstützvorrichtung eine vorteilhafte Ableitung der Abschussreaktionskräfte erfolgen.

Bevorzugt ist es ferner, wenn die Dämpfungscharakteristik der Abstützvorrichtung umso härter eingestellt wird, je größer die in die Waffe eingebrachte Treibladungsmenge ist. Die zu erwartenden Abschussreaktionskräfte erhöhen sich betragsmäßig mit steigender Treibladungsmenge, weshalb durch eine entsprechend härtere Dämpfungscharakteristik der Abstützvorrichtung bei zunehmender Treibladungsmenge eine gleichbleibende Stabilität der Waffenplattform ermöglicht werden kann.

Die im Zusammenhang mit der Waffenplattform beschriebenen Ausgestaltungen können allein oder in Kombination auch bei dem Fahrzeug und/oder dem Verfahren erfindungsgemäß angewendet werden.

Weitere Einzelheiten und Vorteile der Erfindung sollen nachfolgend anhand einiger in den Zeichnungen dargestellter Ausführungsbeispiele erläutert werden. Darin zeigen:
- Fig. 1: ein militärisches Fahrzeug mit einer Waffenplattform gemäß einer ersten Ausführung in perspektivischer Ansicht;
- Fig. 2: das Fahrzeug aus Fig. 1 in einer Ansicht von vorne;
- Fig. 3: das Fahrzeug aus Fig. 1 in einer seitlichen Ansicht;
- Fig. 4: ein militärisches Fahrzeug mit einer Waffenplattform gemäß einer zweiten Ausführung in seitlicher Ansicht; und
- Fig. 5: in stark schematisierter Darstellung eine Draufsicht auf ein Fahrzeug gemäß der ersten Ausführung.

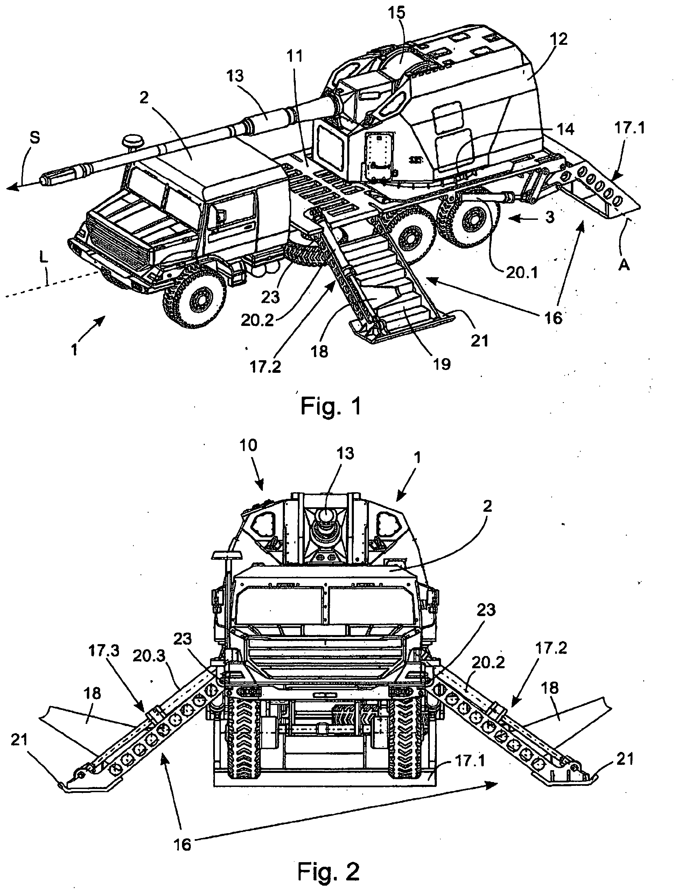

In der Fig. 1 ist ein als geländegängiges Radfahrzeug ausgebildetes militärisches Fahrzeug 1 mit einer die Fahrzeugbesatzung aufnehmenden Fahrerkabine 2 abgebildet. Die Fahrerkabine 2 kann gepanzert ausgebildet sein, so dass die sich innerhalb der Fahrerkabine 2 befindenden Besatzungsmitglieder vor der Einwirkung von Geschossen bzw. Minen und ähnlichen militärischen Bedrohungen geschützt sind.

Das Fahrzeug 1 weist ferner ein Fahrgestell 3 sowie eine im Bereich oberhalb des Fahrgestells 3 angeordnete Waffenplattform 10 mit einer als Artilleriegeschütz ausgebildeten rückstoßbehafteten Rohrwaffe 13 auf, auf deren Einzelheiten nachfolgen noch näher eingegangen werden wird. Bei dem in dem Ausführungsbeispiel dargestellten Artilleriegeschütz handelt es sich um ein Leichtgeschütz. Während der Schussabgabe muss die Waffe 13 zur Ableitung der sich ergebenden Abschussreaktionskräfte abgestützt werden, da die sich ergebenden Abschussreaktionskräfte von dem Fahrgestell 3 allein nicht aufgenommen werden können.

Die Waffenplattform 10 besteht aus einem plattformartigen Unterbau 11, welcher mit dem Fahrzeug 1 verbunden ist und einen im Wesentlichen rechteckigen Grundriss aufweist, sowie einem gegenüber dem Unterbau 11 drehbar gelagerten Turm 12, der oberhalb des Unterbaus 11 angeordnet ist. Der Turm 12 ist in einem Drehlager 14 aufgenommen, über welches der Turm 12 in azimutaler Richtung gerichtet werden kann. In dem Turm 12 ist die Waffe 13 über ein weiteres Drehlager 15 in Elevation richtbar gelagert. Die Waffe 13 kann in den Drehlagern 14 und 15 über in den Figuren nicht dargestellte Richtantriebe in Azimut und Elevation gerichtet werden. Der Turm 12 und der Unterbau 11 bilden insoweit eine Turmlafette.

Zur Abstützung der Waffenplattform 10 ist an dem Unterbau 11 eine Abstützvorrichtung 16 angeordnet, welche in den Ausführungsbeispielen insgesamt drei Stützen 17.1-17.3 aufweist, vgl. Fign. 1 und 2 .

Zur Vermeidung zu starker Bauteilbelastungen bei der Schussabgabe mit der Waffe 13, ist die Abstützvorrichtung 16 gedämpft ausgebildet. Die Abstützvorrichtung 16 ist dabei derart ausgestaltet, dass ihre Dämpfungscharakteristik in Abhängigkeit von den zu erwartenden Abschussreaktionskräften einstellbar ist. Durch diese Anpassung der Dämpfungscharakteristik der Abstützvorrichtung 16 an die zu erwartenden Abschussreaktionskräfte ergibt sich eine gegenüber einer unveränderbaren Dämpfung deutlich reduzierte Beanspruchung der im Kraftfluss der Abschussreaktionskräfte liegenden Bauteile und damit eine größere Lebensdauer der Waffenplattform 10.

Einzelheiten dieser gedämpften Abstützvorrichtung 16 sollen im Folgenden erläutert werden.

Eine erste Stütze 17.1 ist an einer im Heckbereich des Fahrzeugs 12 angeordneten Seite des Unterbaus 11 angeordnet. Die Stütze 17.1 ist mit einem Ende schwenkbeweglich an dem Unterbau 11 angelenkt und um eine Schwenkachse A schwenkbar, welche quer zur einer Fahrzeuglängsachse L des Fahrzeugs 1 angeordnet ist. Zur Überführung der Stütze 17.1 von einer hochgeschwenkten Stellung in die in den Fign. 1-3 dargestellte Abstützstellung weist die Stütze 17.1 einen als Hydraulikzylinder 20.1 ausgebildeten Antrieb auf, welcher zudem ein Dämpfungselement zur Dämpfung der Stütze 17.1 bildet. Dem Hydraulikzylinder 20.1 kommt insoweit eine Doppelfunktion zu.

Die heckseitige Stütze 17.1 kann nach Art eines Schließelements ausgebildet sein, welches in der hochgeschwenkten Schließstellung einen heckseitigen Verschluss einer schließbaren Öffnung des gegenüber dem Unterbau 11 drehbar gelagerten Turms 12 bildet. Ein entsprechendes Schließelement ist in der deutschen Patentanmeldung 10 2011 050 537 beschrieben.

Ferner weist die Abstützvorrichtung 16 zwei an den Längsseiten der Waffenplattform 10 angeordnete Stützen 17.2 und 17.3 auf, welche spiegelsymmetrisch zueinander angeordnet und mit einem Ende über Schwenklager 23 schwenkbeweglich an dem Unterbau 11 der Waffenplattform 10 angelenkt sind. Die Stützen 17.2 und 17.3 sind im Bereich zweier gegenüberliegender Seiten der Waffenplattform 10 schwenkbeweglich gelagert. In Bezug auf das Fahrzeug 1 sind die Stützen 17.2, 17.3 im Bereich der Längsseiten des Fährzeugs 1 angelenkt. Zur Dämpfung der Stützen 17.2, 17.3 sowie zur Überführung der Stützen 17.2,17.3 von ihrer hochgeschwenkten Stellung in die in den Fig. 1 und 2 dargestellte, der Abstützung der Waffenplattform 10 dienenden Abstützstellung ist an den Stützen 17.2,17.3 jeweils ein Hydraulikzylinder 20.2, 20.3 als Antrieb sowie als Dämpfungselement angeordnet.

Soll die Waffenplattform 10 transportiert werden, können die Stützen 17.2 und 17.3 hochgeschwenkt werden. In der hochgeschwenkten Stellung bilden die Stützen 17.2, 17.3 eine Verzurrung für die Waffe 13. Aus diesem Grund sind an den Stützen 17 Zurrbacken 18 angeordnet, welche die Waffe 13 in der hochgeschwenkten Stellung nach Art einer Zange umgreifen und auf diese Weise beispielsweise zum Transport festlegen.

Die Hydraulikzylinder 20.1-20.3 der drei Stützen 17.1-17.3 sind mit ihrem einen Ende schwenkbeweglich an dem Unterbau 11 der Waffenplattform 10 und mit ihrem gegenüberliegenden Ende schwenkbeweglich an der jeweiligen Stütze 17.1-17.3 der Abstützvorrichtung 16 angelenkt. Die Dämpfungselemente 20.1-20.3 sind in unterschiedlichen Ausrichtungen an der Waffenplattform 10 angeordnet, so dass verschiedene Dämpfungselemente 20.1-20.3 unterschiedlich ausgerichtete Komponenten der Abschussreaktionskräfte aufnehmen können. Die Dämpfung der Dämpfungselemente 20.1-20.3 ist dabei unabhängig voneinander einstellbar. Zur Einstellung der Dämpfung der einzelnen Dämpfungselemente 20.1-20.3 der Abstützvorrichtung 16 ist eine in den Figuren nicht dargestellte Steuereinheit vorgesehen, welche an der Waffenplattform 10 oder an dem Fahrzeug 1 angeordnet sein kann. Als Eingangsgrößen werden der Steuereinheit die Art der auf der Waffenplattform 10 angeordneten Waffe 13, der Typ der in die Waffe 13 eingebrachten Munition, die Menge der in die Waffe 13 eingebrachten Treibladung sowie die Richtstellung der Waffe 13 in Azimut und Elevation zugeführt.

Die Eingangsgrößen können durch einen Bediener der Waffe 13 manuell eingegeben oder durch in den Figuren ebenfalls nicht dargestellte Erfassungsvorrichtungen automatisch erfasst werden. Die Richtstellung der Waffe 13 kann beispielsweise durch Stellungsgeber erfolgen, welche für die Azimutrichtstellung im Bereich des Drehlagers 14 und für die Elevationsrichtstellung im Bereich des Drehlagers 15 angeordnet sind.

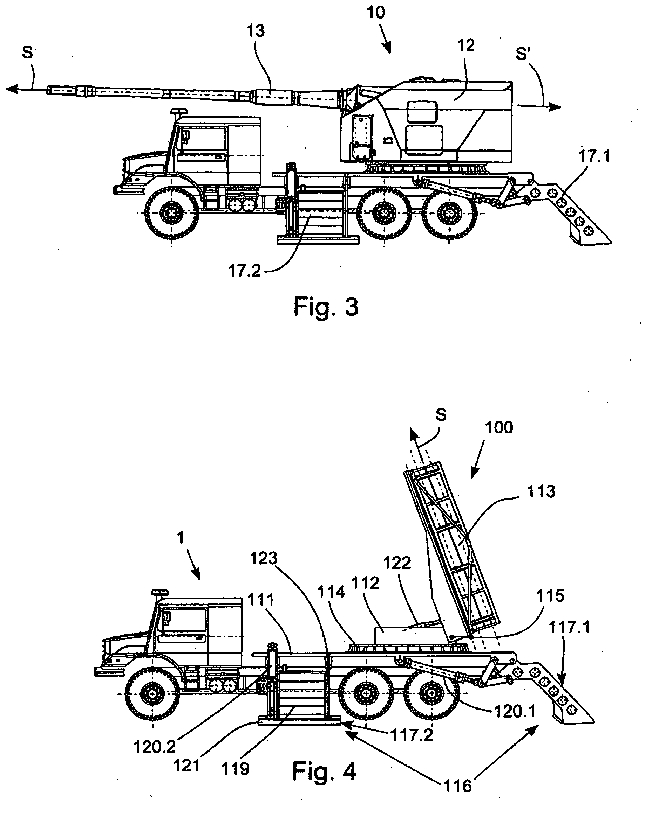

In der Fig. 4 ist eine zweite Ausgestaltung einer Waffenplattform 110 gemäß der Erfindung dargestellt. Die Waffenplattform 110 unterscheidet sich von der Waffenplattform 10 gemäß dem ersten Ausführungsbeispiel im Wesentlichen durch die auf der Waffenplattform 110 angeordnete Waffe 113. Um Wiederholungen zu vermeiden, soll im Folgenden nur auf die Unterschiede gegenüber der vorstehend bereits beschrieben Waffenplattform 10 eingegangen werden, wobei Bezugszeichen mit denselben zwei Endziffern auf gleiche oder gleichwirkende Elemente der beiden Ausgestaltungen verweisen.

Im Gegensatz zu der Waffenplattform 10 weist die Waffenplattform 110 eine rückstoßfreie Waffe 113 auf, welche als Mehrfach-Raketenwerfer ausgebildet ist. Der Mehrfach-Raketenwerfer 113 ist über ein Drehlager 115 in Elevation richtbar auf einer Basis 112 angeordnet. Zum Richten der Waffe 113 in Elevation ist ein Elevations-Richtantrieb 122 vorgesehen, welcher als zwischen der Basis 112 und der Waffe 113 angeordneter Linearantrieb ausgebildet ist. Die Basis 112 ist über ein Drehlager 114 mit dem Unterbau 111 der Waffenplattform 110 drehbar verbunden, so dass die Waffe 113 durch drehen der Basis 112 gegenüber dem Unterbau 11 in Azimut gerichtet werden kann.

Die Abstützvorrichtung 116 unterscheidet sich konstruktiv von der Abstützvorrichtung 16 gemäß dem ersten Ausführungsbeispiel lediglich dadurch, dass die Abstützvorrichtung 116 keine Zurrbacken aufweist. Im Hinblick auf die Dämpfungscharakteristik der Abstützvorrichtungen 16 und 116 ergeben sich jedoch einige Unterschiede. Da aufgrund der unterschiedlichen Art der gemäß den beiden Ausführungsbeispielen auf den Waffenplattformen 10 und 110 angeordneten Waffen 13 und 113 unterschiedliche Abschussreaktionskräfte bei den beiden Waffenplattformen 10 und 110 zu erwarten sind, wird die Dämpfungscharakteristik der Abstützvorrichtung 16 gemäß dem ersten Ausführungsbeispiel anders als die Dämpfungscharakteristik der Abstützvorrichtung 116 gemäß dem zweiten Ausführungsbeispiel eingestellt. Auf diese Weise kann eine Anpassung der Dämpfungscharakteristik an die jeweilige Waffe 13, 113 erfolgen.

Die Anpassung der Dämpfungscharakteristik der Abstützvörrichtung 16, 116 soll nachfolgend im Zusammenhang mit dem erfindungsgemäßen Verfahren zum Betrieb einer Waffenplattform 10, 110 anhand einiger Beispielfälle erläutert werden.

Die Waffenplattform 10 gemäß dem ersten Ausführungsbeispiel weist eine rückstoßbehaftete Waffe 13 auf, weshalb Abschussreaktionskräfte zu erwarten sind, die im Wesentlichen entgegen der Schussrichtung S der Waffe 13 gerichtet sind, vgl. Fig. 3. Bei der Waffe 113 gemäß dem zweiten Ausführungsbeispiel handelt es sich hingegen um eine rückstoßarme Waffe, bei die welcher Abschussreaktionskräfte vor allem in Schussrichtung S wirken, vgl. Fig. 4.

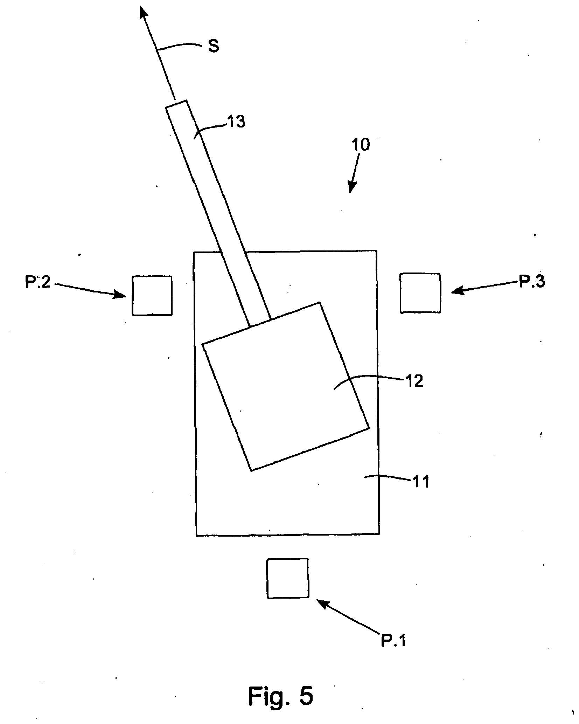

Zur Verbesserung der Stabilität der Waffenplattformen 10 und 110 bei der Schussabgabe wird die Dämpfungscharakteristik der Waffenplattform 10 mit der rückstoßbehafteten Waffe 13 nun derart eingestellt, dass die Dämpfung der Dämpfungselemente 20.1-20.3 umso härter eingestellt wird, je mehr eine der Schussrichtung S der Waffe 13 entgegengesetzte Richtung S' mit der Ausrichtung des jeweiligen Dämpfungselements 20.1-20.3 übereinstimmt. Da die Abschussreaktionskräfte im Wesentlichen in diese Richtung S' wirken, kann eine härtere Dämpfung im Bereich hinter der Waffe 13 eine Verbesserung der Stabilität der Waffenplattform 10 bei der Schussabgabe bewirken. Dies soll anhand der Darstellung in Fig. 5, in welcher die Lage der einzelnen Abstützpunkte P.1-P.3 der Stützen 17.1-17.3 in Bezug zu der Waffenplattform 10 schematisch dargestellt ist, erläutert werden. Befindet sich die Waffe 13 in der in Fig. 5 gezeigten Richtstellung, so tritt ein Maximum der Abschussreaktionskräfte hinter der Waffe 13, also im Bereich des Abstützpunktes P.1 auf. Daher wird die Dämpfung der Stütze 17.1, welche sich mit ihrem freien Ende an dem Abstützpunkt P.1 abstützt, härter eingestellt, als die Dämpfung der andern beiden Stützen 17.2 und 17.3, welche an den Abstützpunkten P.2 und P.3 auf dem Untergrund aufliegen.

Bei der Abstützvorrichtung 116 der Waffenplattform 110 gemäß dem in Fig. 4 dargestellten Ausführungsbeispiel wird genau umgekehrt verfahren. Bei dieser mit einem Raketenwerfer 113 ausgerüsteten Waffenplattform 110 wird die Dämpfung eines Dämpfungselements 120.1, 120.2 umso härter eingestellt, je mehr die Schussrichtung S der Waffe 113 mit der Ausrichtung des jeweiligen Dämpfungselements 120.1, 120.2 übereinstimmt. Bei der Schussabgabe entsteht durch die aus dem Raketenwerfer 113 austretende Rakete eine Zugwirkung in Schussrichtung S, so dass eine härtere Dämpfung der Dämpfungselemente 120.1, 120.2 im Bereich vor der Waffe 113 eingestellt wird. Das hinter der Waffe 113 angeordnete Dämpfungselement der Stütze 117.1 kann weicher eingestellt werden.

Generell sind die zu erwartenden Abschussreaktionskräfte auch von der Menge der in die Waffe eingebrachten Treibladung abhängig. Denn die Treibladungsmenge bestimmt den Betrag der zu erwartenden Abschussreaktionskraft. Daher ist es von Vorteil, wenn die Dämpfungscharakteristik der Abstützvorrichtun 16, 116 umso härter eingestellt wird, je größer die in die Waffe 13, 113 eingebrachte Treibladungsmenge ist. Einer größeren Abschussreaktionskraft, hervorgerufen durch eine größere Treibladungsmenge, kann somit durch eine härter eingestellte Abstützvorrichtung 16, 116 begegnet werden.

Die vorstehend beschriebenen Fahrzeuge 1 und Waffenplattformen 10, 110 sowie das entsprechende Verfahren zu deren Betrieb, zeichnen sich dadurch aus, dass die Dämpfungscharakteristik der Abstützvorrichtung 16, 116 in Abhängigkeit von den zu erwartenden Abschussreaktionskräften der jeweiligen Waffe 13, 113 eingestellt werden kann. Hierdurch kann die Belastung der im Kraftfluss der Abschussreaktionskräfte liegenden Bauteile verringert und die Lebensdauer der Waffenplattform 10, 110 erhöht werden.

### Bezugszeichen:

- 1: Fahrzeug
- 2: Fahrerkabine
- 3: Fahrgestell

- 10: Waffenplattform
- 11: Unterbau
- 12: Turm
- 13: Waffe
- 14: Drehlager
- 15: Drehlager
- 16: Abstützvorrichtung
- 17.1-17.3: Stütze
- 18: Zurrbacke
- 19: Treppe
- 20.1-20.3: Hydraulikzylinder
- 21: Stützfuß
- 23: Schwenklager

- 110: Waffenplattform
- 111: Unterbau
- 112: Basis
- 113: Waffe
- 114: Drehlager
- 115: Drehlager
- 116: Abstützvorrichtung
- 117.1-117.3: Stütze
- 119: Treppe
- 120.1,120.2: Hydraulikzylinder
- 121: Stützfuß
- 123: Schwenklager

- A: Schwenkachse
- L: Fahrzeuglängsachse
- S: Schussrichtung
- S': Richtung

## Patentansprüche

1. Waffenplattform mit einem Unterbau (11, 111), einer an dem Unterbau (11, 111) angeordneten Abstützvorrichtung (16, 116) und einer gegenüber dem Unterbau (11, 111) richtbar angeordneten Waffe (13, 113), wobei der Unterbau (11, 111) über die zur Aufnahme von Abschussreaktionskräften gedämpft ausgestaltete Abstützvorrichtung (16, 116) gegenüber dem Untergrund abstützbar ist,
**dadurch gekennzeichnet,**
**dass** die Dämpfungscharakteristik der Abstützvorrichtung (16, 116) in Abhängigkeit der zu erwartenden Abschussreaktionskräfte der Waffe (13, 113) einstellbar ist.

2. Waffenplattform nach Anspruch 1, **dadurch gekennzeichnet, dass** die Dämpfungscharakteristik der Abstützvorrichtung (16, 116) in Abhängigkeit der Richtung und/oder des Betrags der zu erwartenden Abschussreaktionskräfte der Waffe (13, 113) einstellbar ist

3. Waffenplattform nach einem der vorhergehenden Ansprüche, **dadurch gekennzeichnet, dass** die Dämpfungscharakteristik der Abstützvorrichtung (16, 116) in Abhängigkeit der Art der Waffe (13, 113) einstellbar ist.

4. Waffenplattform nach einem der vorhergehenden Ansprüche, **dadurch gekennzeichnet, dass** die Dämpfungscharakteristik der Abstützvorrichtung (16, 116) in Abhängigkeit der Richtstellung der Waffe (13, 113) einstellbar ist.

5. Waffenplattform nach einem der vorhergehenden Ansprüche, **dadurch gekennzeichnet, dass** die Dämpfungscharakteristik der Abstützvorrichtung (16, 116) in Abhängigkeit des Typs einer in die Waffe (13, 113) eingebrachten Munition einstellbar ist.

6. Waffenplattform nach einem der vorhergehenden Ansprüche, **dadurch gekennzeichnet, dass** die Dämpfungscharakteristik der Abstützvorrichtung (16) in Abhängigkeit der einer in die Waffe (13) eingebrachten Treibladung einstellbar ist.

7. Waffenplattform nach einem der vorhergehenden Ansprüche, **dadurch gekennzeichnet, dass** die Abstützvorrichtung (16, 116) mehrere, insbesondere drei, Stützen (17.1-17.3, 117.1-117.2) aufweist

8. Waffenplattform nach Anspruch 7, **dadurch gekennzeichnet, dass** die Stützen (17.1-17.3, 117.1-117.2) mit einem ihrer Enden an dem Unterbau (11, 111) angelenkt sind und das andere Ende einen Abstützpunkt bildet.

9. Waffenptattform nach einem der Ansprüche 7 oder 8, **dadurch gekennzeichnet, dass** die Stützen (17.1-17.3, 117.1-117.2) eine einstellbare Dämpfung aufweisen.

10. Waffenplattform nach einem der Ansprüche 7 bis 9, **dadurch gekennzeichnet, dass** die Stützen (17.1-17.3, 117.1-117.2) jeweils mindestens ein Dämpfungselement (20.1-20.3, 120.1, 120.2) aufweisen.

11. Militärisches Fahrzeug mit einer Waffenplattform (10, 110), die einen Unterbau (11, 111), eine an dem Unterbau (11, 111) angeordnete Abstützvorrichtung (16, 116) und eine gegenüber dem Unterbau (11, 111) richtbar angeordnete Waffe (13, 113) aufweist, wobei der Unterbau (11, 111) über die zur Aufnahme von Abschussreaktionskräften gedämpft ausgestaltete Abstützvorrichtung (16, 116) gegenüber dem Untergrund abstützbar ist, **dadurch gekennzeichnet,**
**dass** die Dämpfungscharakteristik der Abstützvorrichtung (16, 116) in Abhängigkeit der zu erwartenden Abschussreaktionskräfte der Waffe (13, 113) einstellbar ist.

12. Verfahren zum Betrieb einer Waffenplattform (10, 110) mit einem Unterbau (11, 111), einer an dem Unterbau (11, 111) angeordneten Abstützvorrichtung (16, 116) und einer gegenüber dem Unterbau (11, 111) richtbar angeordneten Waffe (13, 113), wobei der Unterbau (11, 111) über die zur Aufnahme von Abschussreaktionskräften gedämpft ausgestaltete Abstützvorrichtung (16, 116) gegenüber dem Untergrund abstützbar ist, **dadurch gekennzeichnet,**
**dass** die Dämpfungscharakteristik der Abstützvorrichtung (16, 116) in Abhängigkeit der zu erwartenden Abschussreaktionskräfte der Waffe (13, 113) eingestellt wird.

13. Verfahren zum Betrieb einer Waffenplattform nach Anspruch 12, **dadurch gekennzeichnet, dass** die Abstützvorrichtung (16) mehrere einstellbar gedämpfte Stützen (17.1-17.3) aufweist, die jeweils Abstützpunkte der Waffenplattform (10) bilden, wobei die Dämpfung der Stützen (17.1-17.3) umso weicher eingestellt wird, je mehr die Schussrichtung (S) der Waffe (13) in Azimut mit der Position des jeweiligen Abstützpunktes fluchtet.

14. Verfahren zum Betrieb einer Waffenplattform nach Anspruch 12, **dadurch gekennzeichnet, dass** die Abstützvorrichtung (116) mehrere einstellbar gedämpfte Stützen (117.1-117.3) aufweist, die jeweils Abstützpunkte der Waffenplattform (110) bilden, wobei die Dämpfung der Stützen (117.1, 117.2) umso härter eingestellt wird, je mehr die Schussrichtung (S) der Waffe (113) in Azimut mit der Position des jeweiligen Abstützpunktes fluchtet.

15. Verfahren zum Betrieb einer Waffenplattform nach einem der Ansprüche 12 bis 14 **dadurch gekennzeichnet, dass** die Dämpfungscharakteristik der Abstützvorrichtung (16, 116) umso härter eingestellt wird, je größer die in die Waffe (13, 113) eingebrachte Treibladungsmenge ist.

## Claims

1. Weapons platform comprising an undercarriage (11, 111), a supporting device (16, 116) arranged at the undercarriage (11,111) and a weapon (13, 113) arranged in a directable manner with respect to the undercarriage (11, 111), wherein the undercarriage (11, 111) can be supported with respect to the ground beneath by means of the supporting device (16, 116) of a damped design for absorbing firing reaction forces,
**characterized**
**in that** the damping characteristics of the supporting device (16, 116) can be set in dependence on the firing reaction forces of the weapon (13, 113) that are to be expected.

2. Weapons platform according to Claim 1, **characterized in that** the damping characteristics of the supporting device (16, 116) can be set in dependence on the direction and/or the magnitude of the firing reaction forces of the weapon (13, 113) that are to be expected.

3. Weapons platform according to one of the preceding claims, **characterized in that** the damping characteristics of the supporting device (16, 116) can be set in dependence on the type of weapon (13, 113).

4. Weapons platform according to one of the preceding claims, **characterized in that** the damping characteristics of the supporting device (16, 116) can be set in dependence on the directional position of the weapon (13, 113).

5. Weapons platform according to one of the preceding claims, **characterized in that** the damping characteristics of the supporting device (16, 116) can be set in dependence on the type of munition introduced into the weapon (13, 113).

6. Weapons platform according to one of the preceding claims, **characterized in that** the damping characteristics of the supporting device (16) can be set in dependence on the propulsive charge introduced into the weapon (13).

7. Weapons platform according to one of the preceding claims, **characterized in that** the supporting device (16, 116) has a number of supports (17.1-17.3, 117.1-117.2), in particular three.

8. Weapons platform according to Claim 7, **characterized in that** the supports (17.1-17.3, 117.1-117.2) are articulated by one of their ends on the undercarriage (11, 111) and the other end forms a supporting point.

9. Weapons platform according to either of Claims 7 and 8, **characterized in that** the supports (17.1-17.3, 117.1-117.2) have a damping that can be set.

10. Weapons platform according to one of Claims 7 to 9, **characterized in that** the supports (17.1-17.3, 117.1-117.2) respectively have at least one damping element (20.1-20.3, 120.1,120.2).

11. Military vehicle comprising a weapons platform (10, 110), which has an undercarriage (11, 111), a supporting device (16, 116) arranged at the undercarriage (11,111) and a weapon (13, 113) arranged in a directable manner with respect to the undercarriage (11, 111), wherein the undercarriage (11, 111) can be supported with respect to the ground beneath by means of a supporting device (16, 116) of a damped design for absorbing firing reaction forces,
**characterized**
**in that** the damping characteristics of the supporting device (16, 116) can be set in dependence on the firing reaction forces of the weapon (13, 113) that are to be expected.

12. Method for operating a weapons platform (10, 110) comprising an undercarriage (11, 111), a supporting device (16, 116) arranged at the undercarriage (11,111) and a weapon (13, 113) arranged in a directable manner with respect to the undercarriage (11, 111), wherein the undercarriage (11, 111) can be supported with respect to the ground beneath by means of a supporting device (16, 116) of a damped design for absorbing firing reaction forces, **characterized**
**in that** the damping characteristics of the supporting device (16, 116) are set in dependence on the firing reaction forces of the weapon (13, 113) that are to be expected.

13. Method for operating a weapons platform according to Claim 12, **characterized in that** the supporting device (16) has a number of supports (17.1-17.3) that can be set in their damping and respectively form supporting points of the weapons platform (10), the damping of the supports (17.1-17.3) being set as all the softer the more the firing direction (S) of the weapon (13) is in line in terms of azimuth with the position of the respective supporting point.

14. Method for operating a weapons platform according to Claim 12, **characterized in that** the supporting device (116) has a number of supports (117.1 - 117.3) that can be set in their damping and respectively form supporting points of the weapons platform (110), the damping of the supports (117.1-117.2) being set as all the harder the more the firing direction (S) of the weapon (113) is in line in terms of azimuth with the position of the respective supporting point.

15. Method for operating a weapons platform according to one of Claims 12 to 14, **characterized in that** the damping characteristics of the supporting device (16, 116) are set as all the harder the greater the amount of propulsive charge that is introduced into the weapon (13, 113).

## Revendications

1. Plateforme de tir comprenant un châssis (11, 111), un dispositif d'appui (16, 116) disposé sur le châssis (11, 111) et une arme (13, 113) disposée de manière à pouvoir être orientée par rapport au châssis (11, 111), dans laquelle le châssis (11, 111) peut s'appuyer par rapport au sol sur le dispositif d'appui (16, 116) configuré avec un amortissement destiné à permettre l'absorption de forces de réaction aux tirs,
**caractérisée en ce que** la caractéristique d'amortissement du dispositive d'appui (16, 116) peut être ajustée en fonction des forces de réaction aux tirs attendues de l'arme (13, 113).

2. Plateforme de tir selon la revendication 1, **caractérisée en ce que** la caractéristique d'amortissement du dispositif d'appui (16, 116) peut être ajustée en fonction de la direction et/ou de la valeur présentée par les forces de réaction aux tirs attendues de l'arme (13, 113).

3. Plateforme de tir selon l'une quelconque des revendications précédentes, **caractérisée en ce que** la caractéristique d'amortissement du dispositif d'appui (16, 116) peut être ajustée en fonction du type de l'arme (13, 113).

4. Plateforme de tir selon l'une quelconque des revendications précédentes, **caractérisée en ce que** la caractéristique d'amortissement du dispositif d'appui (16, 116) peut être ajustée en fonction de la position d'orientation de l'arme (13, 113).

5. Plateforme de tir selon l'une quelconque des revendications précédentes, **caractérisée en ce que** la caractéristique d'amortissement du dispositif d'appui (16, 116) peut être ajustée en fonction du type d'une munition introduite dans l'arme (13, 113).

6. Plateforme de tir selon l'une quelconque des revendications précédentes, **caractérisée en ce que** la caractéristique d'amortissement du dispositif d'appui (16) peut être ajustée en fonction de la charge propulsive introduite dans l'arme (13).

7. Plateforme de tir selon l'une quelconque des revendications précédentes, **caractérisée en ce que** le dispositif d'appui (16, 116) présente plusieurs supports (17.1 - 17.3, 117.1 - 117.2), en particulier trois.

8. Plateforme de tir selon la revendication 7, **caractérisée en ce que** les supports (17.1 - 17.3, 117.1 - 117.2) sont articulés par l'une de leurs extrémités au niveau d'un châssis (11, 111), et **en ce que** l'autre extrémité forme un point d'appui.

9. Plateforme de tir selon l'une quelconque des revendications 7 ou 8, **caractérisée en ce que** les supports (17.1 -17.3, 117.1 - 117.2) présentent un amortissement pouvant être ajusté.

10. Plateforme de tir selon l'une quelconque des revendications 7 à 9, **caractérisée en ce que** les supports (17.1 - 17.3, 117.1 - 117.2) présentent respectivement au moins un élément d'amortissement (20.1 - 20.3, 120.1, 120.2).

11. Véhicule militaire équipé d'une plateforme de tir (10, 110), qui présente un châssis (11, 111), un dispositif d'appui (16, 116) disposé sur le châssis (11, 111) et une arme (13, 113) disposée de manière à pouvoir être orientée par rapport au châssis (11, 111), dans laquelle le châssis (11, 111) peut s'appuyer par rapport au sol sur le dispositif d'appui (16, 116) configuré avec un amortissement destiné à permettre l'absorption de forces de réaction aux tirs,
**caractérisé en ce que**
la caractéristique d'amortissement du dispositif d'appui (16, 116) peut être ajustée en fonction des forces de réaction aux tirs attendues de l'arme (13, 113).

12. Procédé permettant de faire fonctionner une plateforme de tir (10, 110) pourvue d'un châssis (11, 111), un dispositif d'appui (16, 116) disposé sur le châssis (11, 111) et d'une arme (13, 113) disposée de manière à pouvoir être orientée par rapport au châssis (11, 111), dans lequel le châssis (11, 111) peut prendre appui par rapport au sol sur le dispositif d'appui (16, 116) configuré avec un amortissement destiné à permettre l'absorption de forces de réaction aux tirs,
**caractérisé en ce que** la caractéristique d'amortissement du dispositif d'appui (16, 116) est ajustée en fonction des forces de réaction aux tirs attendues de l'arme (13, 113).

13. Procédé permettant de faire fonctionner une plateforme de tir selon la revendication 12, **caractérisé en ce que** le dispositif d'appui (16) présente plusieurs supports (17.1 - 17.3) à amortissement pouvant être ajusté, lesquels forment respectivement des points d'appui de la plateforme de tir (10), dans lequel l'amortissement des supports (17.1 - 17.3) est ajusté de manière d'autant plus souple que la direction de tir (S) de l'arme (13) est alignée en azimut avec la position du point d'appui respectif.

14. Procédé permettant de faire fonctionner une plateforme de tir selon la revendication 12, **caractérisé en ce que** le dispositif d'appui (116) présente plusieurs supports (117.1 - 117.3) à amortissement pouvant être ajusté, lesquels forment respectivement des points d'appui de la plateforme de tir (110), dans lequel l'amortissement des supports (117.1, 117.2) est ajusté de manière d'autant plus forte que la direction de tir (S) de l'arme (113) est alignée en azimut avec la position du point d'appui respectif.

15. Procédé permettant de faire fonctionner une plateforme de tir selon l'une quelconque des revendications 12 à 14, **caractérisé en ce que** la caractéristique d'amortissement du dispositif d'appui (16, 116) est ajustée de manière d'autant plus rigide que la quantité de charge propulsive introduite dans l'arme (13, 113) est importante.
